(19) Europäisches Patentamt
European Patent Office
Office européen des brevets

(11) **EP 2 960 290 B1**

(12) **EUROPEAN PATENT SPECIFICATION**

(45) Date of publication and mention of the grant of the patent:
**30.01.2019 Bulletin 2019/05**

(51) Int Cl.:
*C08L 9/02* (2006.01)          *C08K 3/22* (2006.01)
*C08L 15/00* (2006.01)        *G01D 5/245* (2006.01)

(21) Application number: **14754893.7**

(22) Date of filing: **05.02.2014**

(86) International application number:
**PCT/JP2014/052620**

(87) International publication number:
**WO 2014/129309 (28.08.2014 Gazette 2014/35)**

(54) **NITRILE RUBBER COMPOSITION**

NITRILKAUTSCHUKZUSAMMENSETZUNG

COMPOSITION DE CAOUTCHOUC NITRILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.02.2013 JP 2013032217**

(43) Date of publication of application:
**30.12.2015 Bulletin 2015/53**

(73) Proprietor: **NOK Corporation**
**Minato-ku**
**Tokyo 105-8585 (JP)**

(72) Inventors:
- **YAMOTO Hiromitsu**
  **Fujisawa-shi**
  **Kanagawa 251-0042 (JP)**
- **KOMIYA Eiji**
  **Aso-shi**
  **Kumamoto 869-2231 (JP)**
- **FURUKAWA Tomonori**
  **Fujisawa-shi**
  **Kanagawa 251-0042 (JP)**

(74) Representative: **Beckmann, Claus**
**Kraus & Weisert**
**Patentanwälte PartGmbB**
**Thomas-Wimmer-Ring 15**
**80539 München (DE)**

(56) References cited:
JP-A- 2003 183 443      JP-A- 2006 066 828
JP-A- 2006 066 828      JP-A- 2006 225 601
JP-A- 2009 074 628      JP-A- 2010 164 807
JP-A- 2011 079 885      JP-A- 2011 079 885
US-A- 4 308 155          US-A1- 2012 015 189

## Description

TECHNICAL FIELD

The present invention relates to a nitrile rubber composition, and more particularly to a nitrile rubber composition containing magnetic powder in addition to rubber components.

BACKGROUND ART

In magnetic encoders for use at encoder positions of wheel speed sensors, etc., rubber magnets designed specifically for the sensors have been so far used. Magnetic force as the most important characteristic of rubber magnets designed specifically for the sensors is substantially proportional to a compounding ratio of magnetic powder, and thus to increase the magnetic force, the compounding ratio of the magnetic powder must be increased, but too higher the compounding ratio of the magnetic powder gives rise to such problems as deterioration of processability due to an increase in the viscosity of rubber compound or an increase in the hardness of moldings and loss of flexibility as deemed to be an advantage of rubber magnet.

In order to solve these problems, the present applicant has previously proposed a rubber composition that is used as a vulcanization-molding material for sensor rubber magnets used in magnetic encoders, the rubber composition comprising 450 to 1,000 parts by weight of magnetic powder based on 100 parts by weight of a rubber mixture composed of 80 to 95 wt.% of solid nitrile rubber having a nitrile content of 38 to 42%, and 20 to 5 wt.% of liquid nitrile rubber having a B type viscosity (70°C) of 4 to 8 Pa·s (4,000 to 8,000 cps) and a nitrile content of 26 to 32%, the liquid nitrile rubber being co-crosslinkable by the same nitrile rubber vulcanizing agent as the solid nitrile rubber (see Patent Document 1). The creative point of this rubber composition is that a magnetic powder is highly filled therein while reducing the compound viscosity by adding a liquid polymer to a millable type polymer. However, when 1,000 parts by weight or more of magnetic powder is added to 100 parts by weight of nitrile rubber so as to achieve high magnetic force, which has recently been required, roll processability is deteriorated, and adhesion to molds during product vulcanization is deteriorated.

In contrast, Patent Document 2 proposes a thermoplastic elastomer composition that uses a thermoplastic elastomer having a specific hardness in place of a vulcanized rubber material, thereby allowing the addition of magnetic powder in an amount of up to 1,400 parts by weight based on 100 parts by weight of thermoplastic elastomer. Comparative Example 3 of Patent Document 2 indicates that when nitrile rubber is used, the maximum amount of magnetic powder that can be added based on 100 parts by weight of nitrile rubber is 900 parts by weight.

JP 2006 066828 A relates to the problem to provide a rubber magnet which has a high orientation and whose natural property of rubber is also important, and moreover, which the rubber magnet has peculiar elongation and flexibility. As a solution to the problem, the document describes a rubber magnet manufacturing method which includes a process where a composition containing a metallic soap and fatty acid as magnet powder, rubber material, and lubricant is press-kneaded to obtain a kneaded product; and a forming process where the kneaded product is formed in a predetermined shape. A fatty acid is a solid fatty acid and the number of carbon preferably is 10 to 17. The fatty acid preferably is at least one kind among a myristic acid, caprylic acid, lauric acid, palmitic acid, and stearic acid.

JP 2011 079885 A relates to the problem to provide a rubber composition improving processability, heat-resistance and an adhesion property while retaining high magnetic force. As a solution to the problem, the document describes a rubber composition containing a magnetic powder and a rubber main material having oil-resistance, (A) 4.5-18 pts.wt. of an antioxidant in which at least one kind selected from aromatic secondary amine based compounds and at least one kind selected from benzimidazole based compounds are also used and (B) 0.7-2.6 pts.wt. of at least one kind of a vulcanizing agent selected from sulfur-containing organic compounds relative to 100 pts.wt. of the rubber main material comprising a diene based rubber.

US 4,308,155 A describes a rubber or plastic magnet of high magnetic properties which is produced by incorporating a magnetoplumbite type magnetic powder into a rubber or thermoplastic or thermosetting matrix at a high concentration with a high degree of orientation of the magnetic particles. Such high concentration and orientation can be obtained by using a magnetoplumbite type magnetic powder having a compressed density in the range between 3.30 g/cm$^3$ and about 3.55 g/cm$^3$ and an average particle size of about 1.00 and 1.50 $\mu$m, said particles being prepared by dry crushing process from coarse sintered particles and having predominantly single crystal structure.

US 2012/015189 A1 describes a bonded magnet required to have a large energy product, which is the product of magnetization Br and coercive force Hc. However, in a ferrite powder for a bonded magnet, when the particle diameter is reduced to improve the coercive force, the packing properties are impaired, and the Br is lowered. When the particle diameter is increased to improve the magnetization, the coercive force is lowered. Therefore, to increase the energy product, both the Br and Hc must be increased. Thus, the document describes a ferrite powder that has a large particle size, is composed of smooth crystals, and suffers only a small reduction in coercive force even after pressurization, which is obtained by mixing a fine ferrite powder having a small particle size with a ferrite powder calcined at a temperature of 1050 °C to 1300 °C in the presence of a chloride at its saturated vapor pressure and then annealing the mixture at 800 °C to 1100 °C. A bonded magnet produced using the powder has an energy product of 2.0 MGOe or more.

PRIOR ART DOCUMENT

PATENT DOCUMENT

Patent Document 1 : JP-B-3982252
Patent Document 2 : JP-A-2007-16057

OUTLINE OF THE INVENTION

PROBLEM TO BE SOLVED BY THE INVENTION

An object of the present invention is to provide a nitrile rubber composition that does not undergo deterioration of roll processability and adhesion to molds during product vulcanization even when a large amount (e.g., 1,000 parts by weight or more) of magnetic powder is added based on 100 parts by weight of nitrile rubber, hydrogenated nitrile rubber, or a blend rubber thereof.

MEANS FOR SOLVING THE PROBLEM

The above object of the present invention can be achieved by a nitrile rubber composition comprising 1,000 to 1,200 parts by weight of a magnetic powder having a compressed density of 3.4 to 3.7 and two particle size distribution peaks at 1 to 2 $\mu$m and 2 to 4 $\mu$m, based on 100 parts by weight of nitrile rubber, hydrogenated nitrile rubber, or a blend rubber thereof, the rubber having a Mooney viscosity $ML_{1+4}$ (100°C) of 20 to 50.

EFFECT OF THE INVENTION

Because a magnetic powder having a high compressed density is added to millable type nitrile rubber and/or hydrogenated nitrile rubber having a low viscosity, the nitrile rubber composition of the present invention has excellent effects in that, in spite of the high magnetic powder content, the viscosity of the rubber compound is kept low, thereby improving processability; and in that the obtained molded product can maintain flexibility while maintaining the original high magnetic force of the magnetic powder compounded in a large amount, without impairing the original physical properties of the rubber.

EMBODIMENTS FOR CARRYING OUT THE INVENTION

The nitrile rubber used is millable type nitrile rubber, hydrogenated nitrile rubber, or a blend rubber thereof, the rubber having a Mooney viscosity $ML_{1+4}$ (100°C) of 20 to 50. Commercially available products can be used as they are. When nitrile rubber having a Mooney viscosity lower than this range is used, the strength of the rubber compound compounded with a large amount of magnetic powder becomes low; therefore, adhesion occurs during roll processing, and continuous winding up cannot be performed, thereby making operations difficult. In contrast, when nitrile rubber having a Mooney viscosity higher than this range is used, the viscosity of the rubber compound becomes high, thereby causing deterioration of workability during roll processing, and a decrease in the fluidity of the rubber compound. Consequently, vulcanizing and molding properties are significantly deteriorated. Millable type nitrile rubber as mentioned herein is rubber that can be plasticized or mixed by a kneader, such as a roll, unlike liquid rubber that is in a liquid or paste state before vulcanization.
As the magnetic powder, those having a compressed density measured by the method described below of 3.4 to 3.7, preferably 3.5 to 3.6 are used. The magnetic powder has two particle size distribution peaks at particle sizes of 1 to 2 $\mu$m and 2 to 4 $\mu$m. Commercial products, such as SF-D630 and SF-H470 (produced by DOWA F-Tec Co., Ltd.), can be used as they are. The particle size distribution peaks as mentioned herein indicate both a part having two downward sides and a part having one downward side in a graph of particle size distribution in which the horizontal axis represents particle size and the vertical axis represents the proportion of particles of each size.
As the type of magnetic powder, at least one of ferrite magnets and rare-earth magnets is generally used; however, ferrite magnets are preferably used because of their low cost and good adhesion to rubber, although their magnetic force is lower than that of rare-earth magnets. In terms of magnetic force, strontium ferrite $SrO \cdot 6Fe_2O_3$ or

barium ferrite BaO·6Fe$_2$O$_3$ is more preferably used. Such magnetic powders preferably have a residual magnetic flux density Br of 1,600 (G) or more and a coercive force iHc of 3,000 (Oe) or more, which are magnetic properties of a compressed powder measured in the following manner: A sample is prepared by adding 1.5 ml of 5 wt.% PVA aqueous solution to 20 g of magnetic powder, and placing the mixture in a cylindrical mold (diameter: 25.4 mm), followed by pressure molding at a pressure of 1 ton/cm$^2$ (98 MPa). The Br and iHc of the sample are measured by a DC magnetization measuring device.

Such a magnetic powder is used at a ratio of 1,000 parts by weight or more, preferably 1,000 to 1,200 parts by weight, based on 100 parts by weight of nitrile rubber, hydrogenated nitrile rubber, or blend rubber thereof. When the ratio of magnetic powder used is greater than this range, the viscosity of the rubber compound becomes high, and the fluidity of the compound is reduced. Thus, the processability of the rubber compound by a roll and vulcanizing and molding properties are deteriorated.

The above nitrile rubber composition is mixed with a vulcanizing agent, such as sulfur, a sulfur-providing compound (e.g., tetramethylthiuram monosulfide or tetramethylthiuram disulfide), or organic peroxide, and optionally further as needed with a reinforcing agent, such as carbon black or silica, a filler, an antioxidant, a plasticizer, a processing aid, a vulcanization accelerator, etc.. The vulcanization of the nitrile rubber composition is generally performed is accordance with a method that is generally used for nitrile rubber or hydrogenated nitrile rubber.

The vulcanization-molded product comprising the nitrile rubber composition is applied as, for example, a sensor rubber magnet used in magnetic encoders. A commercially available phenol resin, epoxy resin, or the like is applied as an adhesive used to bond a sensor rubber magnet and an encoder metal ring. Stainless steel, a cold rolling steel plate, or the like is used as a metal.

EXAMPLES

The following describes the present invention with reference to Examples.

Example 1

| | |
|---|---|
| Nitrile rubber (Nipol DN219, produced by Zeon Corporation; Mooney viscosity ML$_{1+4}$ (100°C): 27) | 100 parts by weight |
| Strontium ferrite magnetic powder (SF-D630, produced by Dowa F-Tec Co., Ltd.; compressed density: 3.59; particle size distribution peaks: 1.7 $\mu$m and 3.3 $\mu$m) | 1,000 parts by weight |
| Active zinc oxide | 3 parts by weight |
| Stearic acid | 2 parts by weight |
| Paraffin wax | 2 parts by weight |
| Fatty acid amide (Diamide O-200, produced by Nippon Kasei Chemical Co., Ltd.) | 2 parts by weight |
| Antioxidant (Nocrac CD, produced by Ouchi-Shinko Kagaku K.K. ;4,4'-bis($\alpha,\alpha$-dimethylbenzyl) diphenyl amine) | 2 parts by weight |
| Polyether-based plasticizer (RS700, produced by Asahi Denka Kogyo K.K.) | 5 parts by weight |
| Sulfur | 2 parts by weight |
| Tetramethylthiuram disulfide (Nocceler TT, produced by Ouchi-Shinko Kagaku K.K.) | 2 parts by weight |
| N-cyclohexyl-2-benzothiazyl sulfenamide; Nocceler CZ, produced by Ouchi-Shinko Kagaku K.K.) | 1 parts by weight |

The above components were kneaded by a closed type kneader (pressurizing type kneader) and an open roll, and the kneaded product was compression-molded at 180°C for 6 minutes, thereby vulcanization-molding a two mm thick test rubber sheet.

The compressed density (CD value) of the magnetic powder was obtained in the following manner. That is, 10 g of magnetic powder sample was placed in a cylindrical mold (diameter: 25.4 mm), and the sample was compressed by a press at an effective pressure of 1,000 kgf/cm$^2$ (98 MPa). The CD value was calculated from the measured thickness (h) of the sample after compression using the following formula:

$$CD\ (g/cm^3) = 10/\pi \times (1.27)^2 \times h$$

The following evaluations and measurements were performed using the kneaded product and test rubber sheet.

Compound processability (roll kneadability): Compound processability was evaluated as follows: excellent roll winding up properties during kneading the rubber composition: ○; slight adhesion, but no impact on kneading: Δ; and large roll adhesion, making kneading operation difficult: ×.

Mold releasability: Mold releasability was evaluated as follows: the test rubber sheet can be smoothly removed from the mold while releasing , without adhesion to the mold or damage to the rubber itself: ○; the rubber sheet can be removed from the mold, although slight adhesion to the mold is observed: Δ; and the rubber sheet is remarkably damaged during removal from the mold, making the removal of the sheet from the mold difficult: ×.

Compound fluidity: The minimum Mooney viscosity Vm was measured at a temperature of 125°C using a Mooney Viscometer AM-3 (produced by Toyo Seiki Seisaku-sho, Ltd.) according to JIS K6300-1:2001 corresponding to ISO 289-1:1994 and 289-2:1994.

Normal-state physical properties (hardness): The instant hardness was measured using a type-A durometer according to JIS K6253:1997 corresponding to ISO 7619:1997.

Normal-state physical properties (tensile strength, elongation): According to JIS K6251:2010 corresponding to ISO 37.

Magnetic force: The magnetic force of a sample (thickness: 2 mm, length: 3 mm, and width: 5 mm) was measured using a VSM-5 vibrating sample type magnetometer (produced by Toei Industry Co., Ltd.) in an applied magnetic field of $1.5 \times 10^4$ Oe at a frequency of 80 Hz. The saturation magnetization Ms (unit: mT) was determined from the magnetic force curve.

Example 2

In Example 1, the amount of magnetic powder was changed to 1,100 parts by weight.

Example 3

In Example 1, the amount of magnetic powder was changed to 1,200 parts by weight.

Example 4

In Example 1, the same amount (1,000 parts by weight) of SF-H470 (produced by Dowa F-Tec Co., Ltd.; compressed density: 3.50; particle size distribution peaks: 1.5 μm and 2.8 μm) was used as the magnetic powder.

Example 5

In Example 1, the same amount (100 parts by weight) of JSR N231L (produced by JSR Corporation; Mooney viscosity $ML_{1+4}$ (100°C): 45) was used as the millable type nitrile rubber.

Example 6 (not according to the invention)

In Example 1, the same amount (1,000 parts by weight) of SF-600 (produced by Dowa F-Tec Co., Ltd.; compressed density: 3.47; particle size distribution peak: 2.6 μm) was used as the magnetic powder.

Example 7

In Example 1, the same amount (100 parts by weight) of hydrogenated nitrile rubber (Zetpol 2030EP, produced by Zeon Corporation; Mooney viscosity $ML_{1+4}$ (100°C): 29) was used in place of the nitrile rubber.

Comparative Example 1

In Example 1, 90 parts by weight of JSR N220S (produced by JSR Corporation; Mooney viscosity $ML_{1+4}$ (100°C): 56) was used as the millable type nitrile rubber, and 10 parts by weight of liquid nitrile rubber (Nipol 1312, produced by Zeon Corporation) was further used.

Comparative Example 2

In Comparative Example 1, 80 parts by weight of JSR N220S was used as the millable type nitrile rubber, and 20 parts by weight of liquid nitrile rubber (Nipol 1312) was further used.

Comparative Example 3

In Example 1, the same amount (1,000 parts by weight) of OP-71 (produced by Dowa F-Tec Co., Ltd.; compressed density: 3.31; particle size distribution peak: 2.2 $\mu$m) was used as the magnetic powder.

Comparative Example 4

In Example 1, the same amount (1,000 parts by weight) of OP-56 (produced by Dowa F-Tec Co., Ltd.; compressed density: 3.14; particle size distribution peak: 1.6$\mu$m) was used as the magnetic powder.

Results of evaluations and measurements of kneaded products and test rubber sheets obtained in the foregoing Examples and Comparative Examples are given in the following Table.

Table

| | Ex. | | | | | | | Comp. Ex. | | | |
|---|---|---|---|---|---|---|---|---|---|---|---|
| Measurement item | 1 | 2 | 3 | 4 | 5 | 6 | 7 | 1 | 2 | 3 | 4 |
| [Before vulcanization] | | | | | | | | | | | |
| Compound processability | | | | | | | | | | | |
| Roll kneadability | ◎ | ◎ | ◎ | ◎ | ◎ | ◯ | ◎ | Δ | × | Δ | × |
| [After vulcanization] | | | | | | | | | | | |
| Mold releasability | ◎ | ◎ | ◎ | ◎ | ◎ | ◯ | ◎ | Δ | × | Δ | × |
| Compound fluidity | | | | | | | | | | | |
| Minimum Mooney viscosity Vm | 36 | 44 | 80 | 46 | 55 | 68 | 51 | 121 | 76 | 76 | 139 |
| Normal-state physical properties | | | | | | | | | | | |
| Hardness (point) | 83 | 85 | 90 | 83 | 84 | 93 | 93 | 91 | - | 94 | - |
| Tensile strength (MPa) | 1.5 | 1.6 | 2.4 | 1.6 | 1.8 | 3.2 | 3.8 | 3.1 | - | 4.2 | - |
| Elongation (%) | 480 | 400 | 330 | 470 | 420 | 260 | 250 | 50 | - | 240 | - |
| Magnetic force | | | | | | | | | | | |
| Saturation magnetization Ms (mT) | 279 | 287 | 295 | 275 | 280 | 272 | 271 | 278 | - | 273 | - |

The above results indicate the following:

(1) In Examples 1 to 7, both roll kneadability and mold releasability are excellent, and since large amounts of magnetic powders are compounded, molded products having high magnetic force can be produced.
(2) When nitrile rubber having a high Mooney viscosity is used, the increase of the compound viscosity can be suppressed by adding a liquid polymer; however, adhesion to the roll is high, processing to the sheet compound is difficult, and both roll kneadability and mold releasability are reduced (Comparative Examples 1 and 2).
(3) In spite of the use of nitrile rubber having an appropriate Mooney viscosity, when a large amount of magnetic powder having a low compressed density is used, the compound viscosity is increased, and processability is deteriorated (Comparative Examples 3 and 4).

INDUSTRIAL APPLICABILITY

The nitrile rubber composition of the present invention can be effectively applied as a vulcanization molding material for, for example, sensor rubber magnets used in magnetic encoders of wheel speed sensors, etc.

Claims

1.    A nitrile rubber composition comprising 1,000 to 1,200 parts by weight of a magnetic powder having a compressed density of 3.4 to 3.7 and two particle size distribution peaks at 1 to 2 $\mu$m and 2 to 4 $\mu$m, based on 100 parts by weight of nitrile rubber, hydrogenated nitrile rubber, or a blend rubber thereof, the rubber having a Mooney viscosity $ML_{1+4}$ (100°C) of 20 to 50.

2.    The nitrile rubber composition according to claim 1, wherein the magnetic powder having a compressed density of 3.4 to 3.7 is at least one of a ferrite magnet and a rare-earth magnet.

3. The nitrile rubber composition according to claim 2, wherein the ferrite magnet is strontium ferrite or barium ferrite.

4. The nitrile rubber composition according to claim 1, which is applied as a vulcanization molding material for sensor rubber magnets used in magnetic encoders.

5. A sensor rubber magnet vulcanization-molded from the nitrile rubber composition according to claim 4.

6. A magnetic encoder using the sensor rubber magnet according to claim 5.

7. The magnetic encoder according to claim 6, which is used in an encoder part of a wheel speed sensor.


**Patentansprüche**

1. Nitrilkautschukzusammensetzung, umfassend 1.000 bis 12.000 Gewichtsteile eines magnetischen Pulvers, das eine Pressdichte von 3,4 bis 3,7 und zwei Partikelgrößenverteilungspeaks bei 1 bis 2 $\mu$m und 2 bis 4 $\mu$m hat, bezogen auf 100 Gewichtsteile Nitrilkautschuk, hydrierten Nitrilkautschuk oder eine Kautschukmischung davon, wobei der Kautschuk eine Mooney-Viskosität $ML_{1+4}$ (100°C) von 20 bis 50 hat.

2. Nitrilkautschukzusammensetzung gemäß Anspruch 1, wobei das magnetische Pulver, das eine Pressdichte von 3,4 bis 3,7 hat, wenigstens eins von einem Ferritmagnet und einem Seltenerdmagnet ist.

3. Nitrilkautschukzusammensetzung gemäß Anspruch 2, wobei der Ferritmagnet Strontiumferrit oder Bariumferrit ist.

4. Nitrilkautschukzusammensetzung gemäß Anspruch 1, die als Vulkanisationsformungsmaterial für Sensorkautschukmagnete, die in Magnet-Kodierern verwendet werden, angewendet wird.

5. Sensorkautschukmagnet, vulkanisationsgeformt aus der Nitrilkautschukzusammensetzung gemäß Anspruch 4.

6. Magnet-Kodierer, der den Sensorkautschukmagnet gemäß Anspruch 5 verwendet.

7. Magnet-Kodierer gemäß Anspruch 6, der in einem Kodiererteil eines Raddrehzahlsensors verwendet wird.


**Revendications**

1. Composition de caoutchouc nitrile comprenant 1000 à 1200 parties en poids d'une poudre magnétique présentant une densité compressée de 3,4 à 3,7 et deux pics de distribution de tailles de particules de 1 à 2 $\mu$m et de 2 à 4 $\mu$m, sur la base de 100 parties en poids de caoutchouc nitrile, un caoutchouc nitrile hydrogéné, ou un caoutchouc de mélange de ceux-ci, le caoutchouc présentant une viscosité Mooney $ML_{1+4}$ (100 °C) de 20 à 50.

2. Composition de caoutchouc nitrile selon la revendication 1, dans laquelle la poudre magnétique présentant une densité compressée de 3,4 à 3,7 est au moins un parmi un aimant de ferrite et un aimant de terres rares.

3. Composition de caoutchouc nitrile selon la revendication 2, dans laquelle l'aimant de ferrite est de la ferrite de strontium ou de la ferrite de baryum.

4. Composition de caoutchouc nitrile selon la revendication 1, qui est appliquée en tant que matériau de moulage par vulcanisation pour des aimants de caoutchouc de capteur utilisés dans des encodeurs magnétiques.

5. Aimant de caoutchouc de capteur moulé par vulcanisation à partir de la composition de caoutchouc nitrile selon la revendication 4.

6. Encodeur magnétique utilisant l'aimant de caoutchouc de capteur selon la revendication 5.

7. Encodeur magnétique selon la revendication 6, qui est utilisé dans une partie d'encodeur d'un capteur de vitesse de roue.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006066828 A
- JP 2011079885 A
- US 4308155 A

- US 2012015189 A1
- JP 3982252 B
- JP 2007016057 A